# EUROPÄISCHE PATENTSCHRIFT

(11) **EP 1 433 381 B1**
(45) Veröffentlichungstag und Bekanntmachung des Hinweises auf die Patenterteilung: **20.12.2006**
(21) Anmeldenummer: 03029184.3
(22) Anmeldetag: 18.12.2003
(51) Int. Cl.: A21B 1/42, A21B 3/07

(54) **Automatisierte Backeinrichtung**
Automated baking apparatus
Dispositif de cuisson automatisé

(30) Priorität: 18.12.2002 DE 20219697 U; 19.03.2003 DE 10312141
(43) Veröffentlichungstag der Anmeldung: 30.06.2004
(73) Patentinhaber: JAN Entwicklung GbR, 71686 Remseck (DE)
(72) Erfinder: Anderl, Johann, 71640 Ludwigsburg (DE)
(74) Vertreter: Fleck, Hermann-Joseph

(56) Entgegenhaltungen:
- EP-A- 0 338 995
- EP-A- 0 887 018
- DE-A- 10 116 423
- DE-A- 19 747 472
- DE-U- 20 302 346
- FR-A- 2 428 977
- FR-A- 2 618 983
- US-A- 3 404 620
- US-A- 4 508 025
- US-A- 5 881 636

## Beschreibung

Die Erfindung bezieht sich auf eine automatische Backeinrichtung mit einer von einer Steuereinrichtung gesteuerten Fördervorrichtung, die mehrere Kanäle aufweist und mittels der Backwaren von einer Zuführvorrichtung durch eine Heizeinrichtung eines Ofenteils zu einer Abnahmevorrichtung gefördert werden.

Eine derartige automatisierte Backeinrichtung ist in der FR-A 2 618 983 angegeben. Bei dieser bekannten Backeinrichtung bzw. Aufwärmeinrichtung handelt es sich um einen Ofenteil mit Heizeinrichtung und mehreren in dem Ofenteil nebeneinander verlaufenden Transportbändern zum unterschiedlich langen Aufwärmen der durch den Ofen beförderten Waren. Die über einen gemeinsamen Eingang in den Ofenteil geführten Waren werden über Zuführmittel auf die verschiedenen Transportbänder verteilt und anschließend einem gemeinsamen Ausgang des Ofenteils zugeführt.

Eine in der EP 0 887 018 A2 offenbarte Backeinrichtung besitzt eine Backstubenseite für die Bedienung durch Backstubenpersonal und eine entsprechend ausgebildete Ladenseite für die Abnahme durch Ladenpersonal. Der Backofen besitzt mehrere Etagen mit jeweils zugeordneten Türen sowohl auf der Backstubenseite als auch auf der Ladenseite.

Weitere automatisierte Backeinrichtungen mit einer Fördervorrichtung, mit der Backwaren von einer Zuführvorrichtung über eine Heizeinrichtung zu einer Abnahmevorrichtung gefördert werden, sind in der US 5,881,636 und der EP 0 923 868 A1 gezeigt.

Der Erfindung liegt die Aufgabe zugrunde, eine automatisierte Backeinrichtung der eingangs genannten Art bereitzustellen, die eine vereinfachte Bedienung zum einen durch das für das Backen verantwortliche Personal und zum anderen für Kunden ergibt.

Diese Aufgabe wird mit den Merkmalen des Anspruches 1 gelöst. Hierbei ist vorgesehen, dass die Backeinrichtung als Laden-Backeinrichtung mit der einem Ladenpersonal zuzuordnenden, vor dem Ofenteil liegenden Zuführvorrichtung und der kundenseitig anzuordnenden, dem Ofenteil folgenden Abnahmevorrichtung in der Weise ausgebildet ist, dass die Abnahmevorrichtung die mehreren an die Fördervorrichtung angeschlossenen Kanäle aufweist, deren Eingängen steuerbare Zuführmittel vorgeschaltet sind, welche mittels der Steuereinrichtung in Abhängigkeit der den Kanälen zuzuführenden Backwaren öffenbar sind, und dass an die Kanäle eine Entnahmevorrichtung zur Entnahme von Backwaren durch Kunden angeschlossen ist.

Mit diesen Maßnahmen wird die Bedienung zum einen durch das für das Backen verantwortliche Personal und zum anderen durch den Abnehmer, d.h. vorliegend den Kunden, einfach. Dabei können die Kanäle mit jeweiligen Abnahmeabschnitten ausgestattet sein oder in einen gemeinsamen Abnahmeabschnitt münden.

Ist vorgesehen, dass entlang der Fördervorrichtung eine Sensoreinrichtung angeordnet ist, mit der die geförderten Backwaren unterscheidbar sind und den zugeordneten oder zuordenbaren Kanälen differenziert zuführbar sind, können die Back- und Fördervorgänge mit einfachen Maßnahmen auf die Kundenwünsche abgestimmt werden.

Um auf Störungen im Förderweg oder unterschiedliche Abnahmemengen reagieren zu können, sind des Weiteren die Maßnahmen vorteilhaft, dass der Fördervorrichtung mindestens eine Puffereinheit zugeordnet ist, der Backwaren gesteuert zuführbar sind, wenn die Abnahmevorrichtung zumindest teilweise gefüllt oder die Förderung gestört ist. Beispielsweise kann die Fördervorrichtung durch einen oder mehrere zusätzliche Behälter am Förderweg, die über ansteuerbare Weichen zugänglich sind, oder über eine oder mehrere umlaufende Pufferstrecken gebildet sein, die durch die Steuereinrichtung an die eigentliche Förderstrecke anschließbar oder von dieser trennbar ist/sind.

Eine gezielte Zuführung von Roh-Backwaren wird dadurch erleichtert, dass die Zuführvorrichtung eine Beladeeinheit mit mehreren, verschiedenen Backwaren zugeordneten oder zuordenbaren Beladekanälen aufweist, die über auf und zu steuerbare Beladeelemente zur Fördervorrichtung führen. Denkbar ist dabei, dass dem Bedienpersonal mittels der Steuereinrichtung Hinweise angezeigt werden, an welcher Art von Backwaren Mangel oder Überschuss herrscht, so dass das Bedienpersonal entsprechend reagieren kann.

Die Steuerung der Förder- und Backvorgänge wird des Weiteren dadurch begünstigt, dass die Sensoreinrichtung in der Beladeeinheit und/oder der Abnahmevorrichtung angeordnete Füllstandsdetektoren aufweist.

Für die Backvorgänge sind des Weiteren die Maßnahmen förderlich, dass der Fördervorrichtung mindestens eine Wendeeinheit für die Backwaren zugeordnet ist.

Die Steuerung wird dabei dadurch begünstigt, dass die Sensoreinrichtung mindestens einen Lagesensor aufweist und dass die mindestens eine Wendeeinheit mittels der Steuereinrichtung in Abhängigkeit von Signalen des mindestens einen Lagesensors ansteuerbar ist.

Die Bedienung und die Backvorgänge werden weiterhin dadurch unterstützt, dass die Steuereinrichtung mit einer Kundeneingabevorrichtung gekoppelt ist, mit der Art und/oder Anzahl der Backwaren wählbar sind und eine Quittierung anforderbar ist.

Ferner tragen zu einer vereinfachten Bedienung die Maßnahmen bei, dass die Entnahmevorrichtung mit mindestens einer Anschlusseinheit zum lösbaren Anbringen eines Transportbehältnisses durch den Kunden versehen ist.

Die Erfindung wird nachfolgend anhand von Ausführungsbeispielen unter Bezugnahme auf die Zeichnungen näher erläutert. Es zeigen:
- Fig. 1: eine schematische Blockdarstellung einer automatisierten Backeinrichtung mit einer Zuführvorrichtung einer Fördervorrichtung und einer Abnahmevorrichtung,
- Fig. 2: eine schematische Darstellung der Fördervorrichtung im Bereich einer Heizeinrichtung,
- Fig. 3: eine in Fig. 1 gezeigte Wendeeinheit in vergrößerter Darstellung,
- Fig. 4A bis 4H: verschiedene Ansichten eines ersten Ausführungsbeispiels einer Fördervorrichtung für Backwaren in Vorderansicht, Seitenansicht von links, Draufsicht auf eine obere Ebene mit Abnahmevorrichtung und eine Draufsicht auf eine untere Ebene mit Zuführvorrichtung,
- Fig. 5: verschiedene Ansichten eines weiteren Ausführungsbeispiels der Fördervorrichtung in einer Vorderansicht, seitlichen Ansicht von links und einer Draufsicht und
- Fig. 6: einen Ausschnitt einer Fördereinheit nach den Fig. 4A bis 4H und 5.

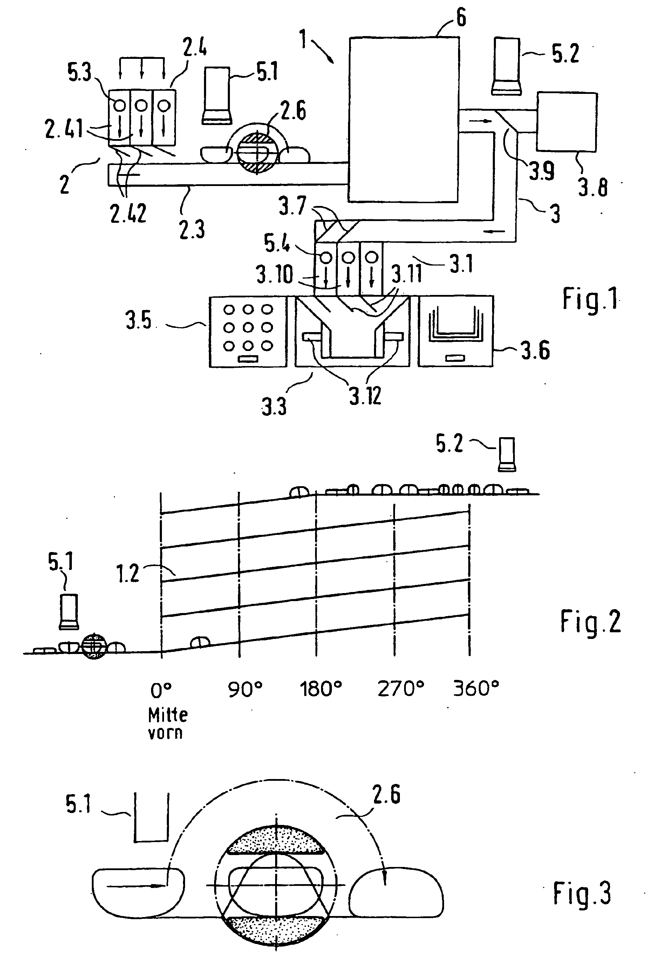

Eine in Fig. 1 gezeigte automatisierte Backeinrichtung zeigt eine Fördereinheit 1, mittels der von einer Zuführvorrichtung 2 über einen Ofenteil 6 Backwaren zu einer Abnahmevorrichtung 3 gefördert werden, um sie dort an einer Entnahmevorrichtung 3.3 durch einen Kunden abnehmen zu können.

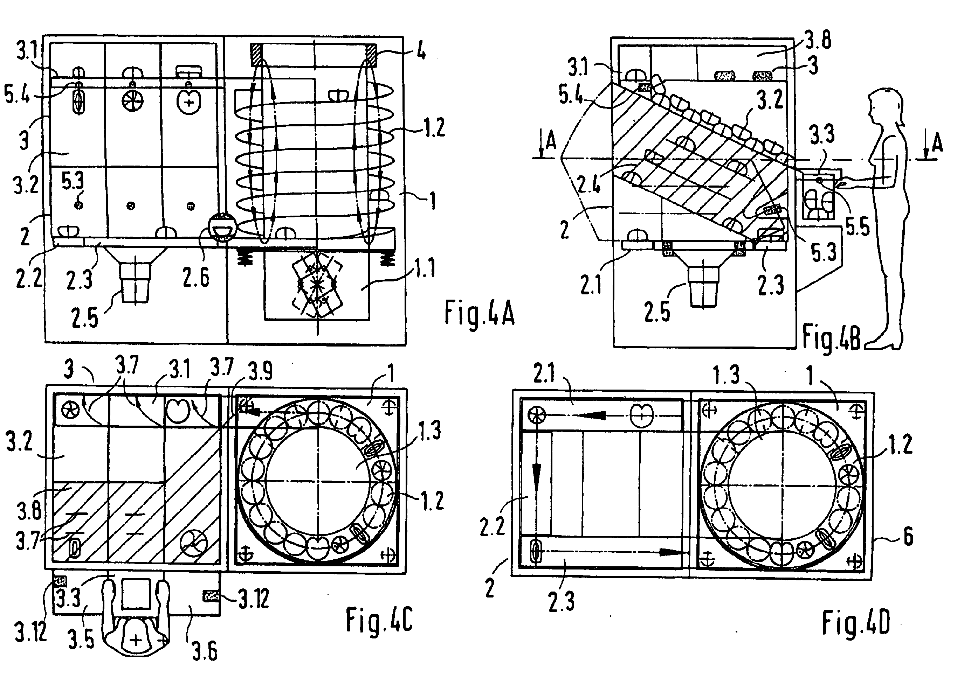

Die Backeinrichtung ist mit einer Steuereinrichtung 3.5 versehen, die bei der gezeigten Ausführungsform im Bereich der Abnahmevorrichtung 3, und zwar neben der Abnahmevorrichtung 3 angeordnet ist. Ferner ist neben der Abnahmevorrichtung 3 eine Verpackungsbevorratung 3.6 angeordnet, aus der als Transportbehälter für den Kunden z.B. geeignete Tüten entnehmbar sind. Die Entnahmevorrichtung 3.3 ist mit einem Anschlussabschnitt zum lösbaren Anbringen der Transportbehälter durch den Kunden versehen. In die Entnahmevorrichtung 3.3 münden ein oder mehrere Kanäle 3.10, denen gleiche oder verschiedenartige Backwaren selektiv über von der Steuereinrichtung 3.5 ansteuerbare Zuführelemente zuführbar sind. Die Ausgänge der Kanäle 3.10 sind mit ebenfalls durch die Steuereinrichtung 3.5 ansteuerbaren Zuführmitteln 3.11, beispielsweise in Form von Klappen versehen, über die die Backwaren nach Wunsch des Kunden in die Entnahmevorrichtung 3.3 abgegeben werden können. Ferner weist die Fördervorrichtung in der sich an den Ofenteil 6 anschließenden Förderstrecke mindestens eine Weiche 3.9 auf, mit der der Zuführweg zu der Entnahmevorrichtung 3.3 gesperrt und statt dessen ein Zuführweg zu einer Puffereinheit 3.8 geöffnet werden kann. In dem Zuführweg zu der Entnahmevorrichtung 3.3 können weitere Verschlussklappen 3.7 zum Steuern der Zuführung der Backwaren mittels der Steuereinrichtung 3.5 angeordnet sein, wie z.B. aus Fig. 4C ersichtlich.

Entlang des Transportweges der Fördereinheit 1 bzw. Fördereinrichtung sind mehrere Einheiten einer Sensoreinrichtung 5 angeordnet, beispielsweise eine erste Sensoreinheit 5.1 an einem Zuführabschnitt 2.3 vor dem Ofenteil 6, mit der z.B. die Art und/oder die Lage einer Roh-Backware erkennbar ist, eine zweite Sensoreinheit 5.2 hinter dem Ofenteil 6, mit der ebenfalls die Art und z.B. die Anzahl der Backwaren feststellbar ist, ein erster Füllstandsdetektor 5.3 zur Füllstandserkennung in einer Beladeeinheit 2.4 und/oder ein zweiter Füllstandsdetektor 5.4 zur Füllstandserkennung in einem Abnahmeabschnitt 3.1 der Abnahmevorrichtung 3 und/oder eine weitere Füllstandserkennung 5.5 an einem kundenseitigen Aufnahmebehältnis. Des Weiteren kann die Sensoreinrichtung 5 weitere Erkennungseinheiten für die Backwaren und Detektoren zum Steuern von Zuführweichen oder Zuführklappen aufweisen. Auch kann vor dem Ofenteil oder auch in demselben mindestens eine Wendeeinheit 2.6 angeordnet sein, die in Abhängigkeit z.B. der Signale der ersten Sensoreinheit 5.1 mittels der Steuereinrichtung 3.5 zum Wenden der Roh-Backware oder der im Backprozess befindlichen Backware ansteuerbar ist.

Die Beladeeinheit 2.4 kann zum gezielten Zuführen der Roh-Backwaren durch das Bedienpersonal mehrere Beladekanäle 2.41 und mittels der Steuereinrichtung 3.5 ansteuerbare Beladeelemente 2.42 aufweisen.

Beim Funktionsablauf während des Backbetriebs befüllt das Laden-Bedienpersonal den oder die Zuführbehälter der Beladeeinheit 2.4 vor Backbeginn bzw. nach Aufforderung durch die entsprechende(n) Füllstandserkennung(en) unter Steuerung durch die Steuereinrichtung 3.5. Nach der Freigabe durch das Bedienpersonal und bei Betriebsbereitschaft des Ofenteils 6 bzw. des Backofens öffnen die programmgesteuerten Verschlussklappen in Form der Beladeelemente 2.42 zu einem Zuführabschnitt 2.3. Am Ende des Zuführabschnittes 2.3 befindet sich (optional) eine Sensorik mit z.B. der ersten Sensoreinheit 5.1, die beispielsweise als Bildverarbeitungssystem, als Lichtprojektionsvorrichtung oder mechanische Schikanen ausgebildet ist und der lagerichtigen Erkennung lageempfindlicher Backwaren vor dem Einlauf in den Ofenteil 6 dient. Backwaren in Kopflage werden mittels der Wendeeinheit 2.6 gedreht und weiter auf dem Zuführabschnitt 2.3 in den Ofenteil 6 gefördert.

Eine weitere Aufgabe der ersten Sensoreinheit 5.1 besteht z.B. in einer Zählung für eine Füllstandsregelung von Entnahme- bzw. Speicherbehältern der Entnahmevorrichtung 3.3, die z.B. den Kanälen 3.10 zugeordnet sind. Die Füllstandsregelung kann alternativ oder zusätzlich auch mit Lichtschranken oder berührungslosen Sensoren an jeder einzelnen Zuführklappe der Abnahmevorrichtung 3 bzw. an jedem einzelnen Beladeelement 2.42 z.B. in Form der Verschlussklappen der Beladeeinheit 2.4 ausgeführt sein.

Die Backwaren durchlaufen die beheizte Backstrecke im Ofenteil 6 bis zum Beginn eines Abnahmeabschnittes 3.1 in einer Ausgangsstrecke. Der Backvorgang wird fortgesetzt, bis die Füllstandserkennung in Form einer Lichtschranke, Bildverarbeitung, eines Zählers oder eines Gewichtdetektors oder dgl. einer der Entnahme- bzw. Speicherbehälter ein definiertes Schaltniveau erreicht hat.

Werden mehrere verschiedene Backwaren gefördert, kann der Typ der Backwaren ebenfalls von der zweiten Sensoreinheit 5.2 z.B. in Form eines Bildverarbeitungssystems oder auf der Basis einer Lichtprojektion erkannt und durch Ansteuerung einer Zuführklappe 3.7 oder Abgabe eines Luftimpulses über den entsprechenden Kanal 3.10 dem betreffenden Entnahme- bzw. Speicherbehälter zugeführt werden. Ebenso denkbar sind mechanische Schikanen für die lagerichtige Zuführung der verschiedenen Backwaren zu den Entnahme- bzw. Speicherbehältern.

Backwaren werden nach Störungen im Backverlauf durch die Steuereinrichtung 3.5 über die Weiche 3.9 in Form einer weiteren Verschlussklappe oder eines Luftimpulses oder dgl. zu der Puffereinheit 3.8 ausgeschleust. In ähnlicher Weise können Backwaren mit Qualitätsmängeln durch die zweite Sensoreinheit 5.2 oder eine weitere Sensorik erkannt und durch die Steuereinrichtung 3.5 über die Weiche 3.9 der Puffereinheit 3.8 oder über eine andere Weiche mit Verschlussklappe oder Luftimpuls oder dgl. auf einen weiteren Störungspuffer ausgeschleust werden.

Die Entnahmevorrichtung 3.3 kann derart ausgebildet sein, dass eine manuelle Entnahme über an sich bekannte Schleusensysteme mit Zangen oder ähnlichen Hilfsmitteln durch den Kunden ermöglicht wird, um die Backwaren nur indirekt zu berühren.

Die Entnahmevorrichtung 3.3 kann auch in der Weise ausgebildet sein, dass der Kunde aus der Verpackungsbevorratung 3.6 eine Tüte, einen Karton oder ähnlisches Verpackungsbehältnis entnimmt und dieses vor dem betreffenden Endabschnitt der Abnahmevorrichtung 3.3 aufhält, abstellt oder daran fixiert, um es in der gewünschten Weise zu befüllen. Die Belegung des Endabschnittes bzw. Befüllabschnittes wird ebenfalls durch eine geeignete Sensorik 3.12 beispielsweise mit Lichtschranke, Lichttaster, Lämmerschwanzschalter oder dgl. erkannt. Bei positivem Signal kann der Kunde nun an einer neben der Entnahmevorrichtung 3.3 angeordneten Bedienvorrichtung mit einem Bediendisplay den gewünschten Backwarentyp auswählen und durch eine folgende Anwahl der Menge die Befüllung nach einer Bestätigungsaufforderung starten. Bei verschiedenen Backwarentypen ist auch die Anzahl mehrerer verschiedener Backwaren und Mengen möglich. Eine Auswahlbegrenzung erfolgt durch die Anzahl der installierten Entnahme- bzw. Speicherbehälter bzw. durch das Fassungsvermögen der Verpackung. Ein Füll- und Zählvorgang wird nun von der Steuerung über die Ansteuerung der einzelnen Verschlussklappen der einzelnen Kanäle 3.10 bzw. zugeordneten Entnahme- oder Speicherbehälter ausgelöst. Nach abgeschlossener Füllung über z.B. Rutschen wird nun ein Etikett (z.B. Barcode, Codeträger) ausgegeben oder auf die Verpackung aufgebracht. Geeignete Verfahren sind hierfür z.B. ein Aufdruck mittels eines Druckers, eine Kennzeichnung mittels eines Lasers oder mittels Schreibköpfe für verpackungsinhaltliche Codeträger, wie z.B. Magnetstreifen, Loch- oder Farbkennzeichnung. Weiterhin ist es möglich, den Zahlbetrag durch Bargeldeinwurf direkt über ein integriertes Kartenlesegerät für Kundenkarten oder andere Kartensysteme (z.B. Geldcard, EC, Visa usw.) abzubuchen. Dies ist insbesondere sinnvoll bei kassenloser Aufstellung der Backeinrichtung z.B. an Bahnhöfen, Flughäfen, Fußgängerzonen, Sonntags-Bäckereien oder nach Ladenschluss usw.

Die Steuereinrichtung 3.5, die auch verteilt bzw. mit ihren wesentlichen Komponenten entfernt von der Backeinrichtung angeordnet sein kann, steuert nun die entsprechenden Verschlusselemente bzw. Zuführelemente der Beladeeinheit 2.4 bzw. Zuführbehälter an, um die entnommenen Backwaren in Typ und Anzahl dem Ofenteil 6 wieder zuzuführen.

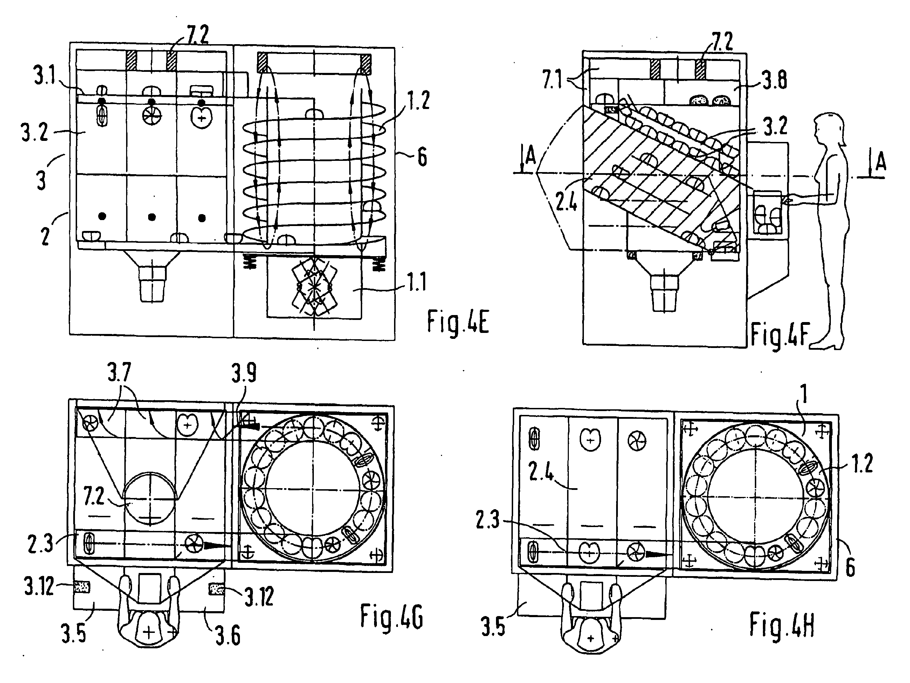

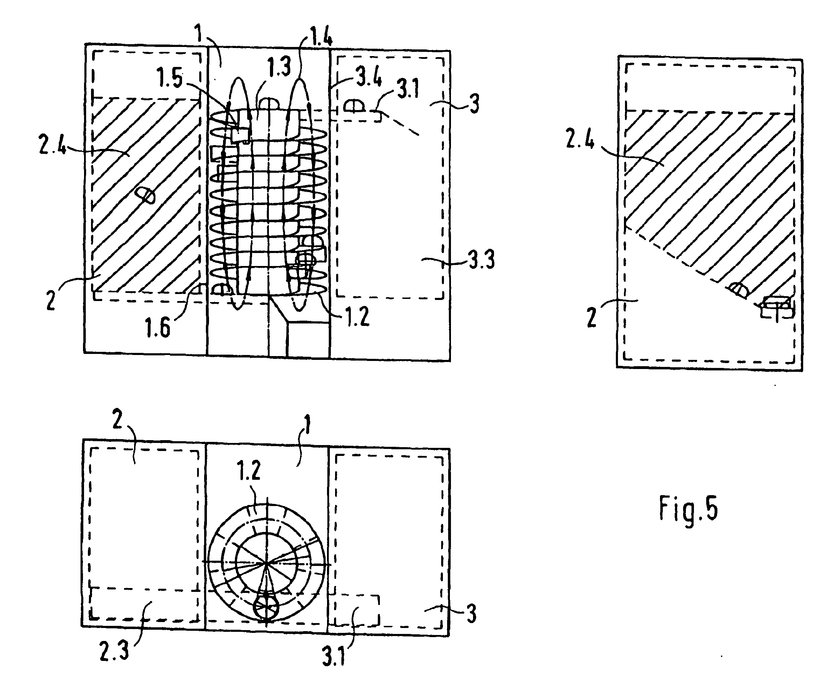

Die Fig. 4A bis 4H zeigen beispielhaft mehrere verschiedene Ansichten einer Fördervorrichtung, nämlich von vorne, von einer Zuführseite aus und zwei Ansichten von oben, wobei Fig. 4C und 4G eine obere Zuführebene zum Austrag der Backwaren und Fig. 4D eine unterste Ebene zum Zufhren in den Ofenteil und Fig. 4H eine mittlere Ebene in Höhe der Ebene A-A gemäß Fig. 4B, 4F zeigen. Die Backwaren werden als Rohware von einer Zuführvorrichtung 2 aus in eine im unteren Bereich einer Fördereinheit 1 angeordneten Schleuse 1.6 in der Fördereinheit 1 zugeführt und von dieser über eine weitere Schleuse 3.4 im oberen Bereich z.B. auf derselben Seite (Fig. 4A bis 4H) oder gegenüberliegenden Seite (Fig. 5) bezüglich der Zuführvorrichtung 2 über eine Abnahmevorrichtung 3 wieder herausgeführt.

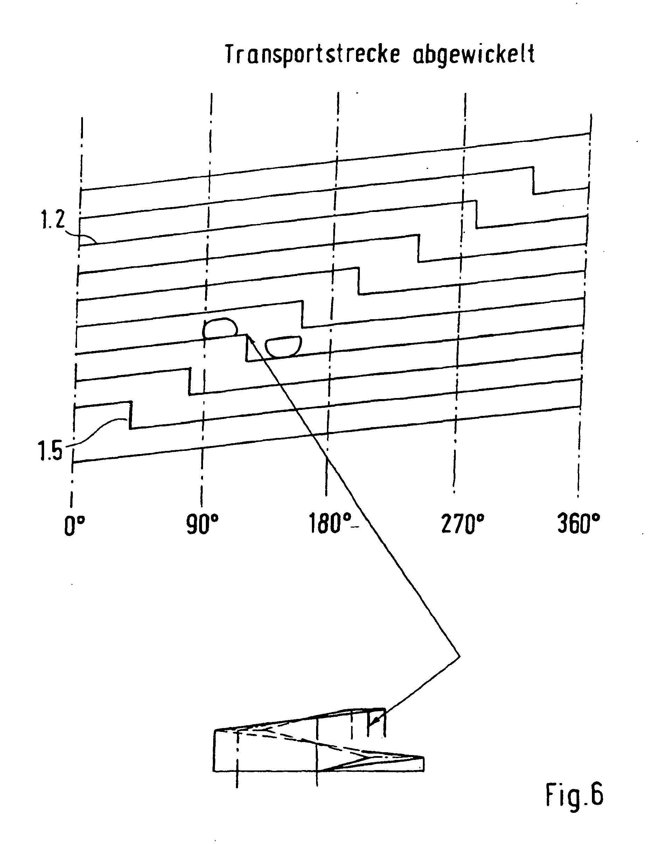

Die Fördereinheit 1 weist eine um einen hohlen zylindrischen Mittelabschnitt 1.3 mehrfach gewundene Wendelfläche 1.2 auf, die, wie aus Fig. 6 ersichtlich, z.B. mehrere Wende-Stufen 1.5 besitzt. Unterhalb der Wendelfläche 1.2 ist im unteren Bereich der Födereinheit 1 ein Schwingantrieb 1.1 angeordnet, um die Wendelfläche in die Backwaren nach oben befördernde Vibrationsbewegungen zu versetzen. Der Schwingantrieb 1.1 besitzt dabei z.B. zwei Antriebseinheiten, die um eine jeweilige Achse rotierende Unwuchten aufweisen, wobei die Vektoren der durch die Unwuchten erzeugten Kraftkomponenten schräg zueinander und z.B. in gleichem Winkel zur Vertikalen ausgerichtet sind, um die gewünschte Aufwärtsförderung über die Wendelfläche 1.2 zu bewirken. Denkbar wären auch Magnetvibratoren. Beim Überqueren der Stufen werden durch deren Abstimmung auf die Eigenschaften der Backwaren, die Vibrationsbewegungen sowie die Steigung der Wendelfläche 1.2 die Backwaren gewendet und in der gewendeten Lage bis zur nächsten Stufe weiter befördert, um sie dort abermals zu wenden. Die Wende-Stufen 1.5 können auch mit Klappen versehen sind, die zum Verhindern eines Wendens für lagerichtig erkannte Backwaren abgestimmt mittels der Steuereinrichtung 3.5 ansteuerbar sind. Pro Umlauf um z.B. 400° der Wendelfläche 1.2 können mehrere Stufen, z.B. zwischen zwei und zehn Stufen oder gewünschtenfalls auch weniger vorgesehen sein. Mit aktiven Wendeeinheiten kann auf Stufen verzichtet werden.

Die Fördereinheit 1 dient auch der Aufwärmung der Backwaren, wobei die Heizluft z.B. von einer oben befindlichen Heizvorrichtung 4 aus in einem Umluftheizkreis 1.4 über die Wendelfläche 1.2 nach unten und durch das Innere des Mittelabschnitts 1.3 wieder nach oben geführt wird.

Wie aus den Fig. 4A bis 4H weiterhin ersichtlich, weist die Zuführvorrichtung 2 verschiedene Zuführabschnitte, nämlich einen an die Einführ-Schleuse 1.6 angeschlossenen Zuführabschnitt 2.3, dem von einer Beladeeinheit 2.4 und/oder einem Einzelbeladeabschnitt 2.1 beispielsweise über einen daran angeschlossenen Umlenkabschnitt 2.2 Roh-Backwaren zugeführt werden können. Der Einzelbeladeabschnitt 2.1 ist dabei z.B. auf einer einer Entnahmevorrichtung 3.3 für die fertigen Backwaren gegenüberliegenden Rückseite der Fördervorrichtung angeordnet und ermöglicht es, nach Wunsch einer Bedienperson oder eines Kunden in einen Backprozess nach Art und Anzahl verschiedene Backwaren einzuschleusen.

Die Beladeeinheit 2.4 ist z.B. als schwenkbarer Zuführbehälter ausgebildet, der zum Beladen in eine waagrechte und zum Zuführen der eingefüllten Roh-Backwaren in eine zu dem Zuführabschnitt 2.3 geneigte Stellung schwenkbar ist. Die Zuführung der Roh-Backwaren aus der Beladeeinheit 2.4 zu dem Zuführabschnitt 2.3 erfolgt mittels Schwerkraft über die Schräge und zusätzlich mittels Vibration, so dass die in der Regel noch gefrorenen oder auch aufgetauten, kalten Roh-Backwaren sicher und bereits in gewissem Grad vereinzelt zu dem Zuführabschnitt 2.3 transportiert werden und dann von dem Zuführabschnitt 2.3 unter weiterer Vereinzelung durch Schikanen (Abweiser) zu der Fördereinheit 1 transportiert werden. Der Zuführabschnitt 2 weist vorteilhaft ebenfalls einen Schwingantrieb auf, wofür sich an dieser Stelle ein Magnetvibrator eignet. Die Zuführung von dem Einzelbeladeabschnitt 2.1 über den Umlenkabschnitt 2.2 kann in entsprechender Weise mit einem Schwingantrieb oder aber z.B. mittels eines Umlaufbandes erfolgen. Ein umlaufendes Förderband ist alternativ auch für den Zuführabschnitt 2.3 denkbar.

Die Abnahmevorrichtung 3, die oberhalb der Zuführvorrichtung 2 angeordnet ist, weist einen Abnahmeabschnitt 3.1 auf, der z.B. ebenfalls mit einem Schwingantrieb oder aber mit einem umlaufenden Förderband ausgestattet sein kann. An den Abnahmeabschnitt 3.1 schließt sich z.B. über dessen gesamte Länge bei dem gezeigten Aufbau, die der Breite der gesamten Abnahmevorrichtung 3 und auch Zuführvorrichtung 2 entspricht, ein nach vorne schräg abfallender Austragabschnitt 3.2 an, der mehrlagig ausgebildet sein kann und in der Entnahmevorrichtung 3.3 mündet. An der Entnahmevorrichtung 3.3 kann z.B. ein Kunde mittels eines daran anschließ-baren geeigneten Behälters fertige Backwaren entnehmen. Der Abnahmeabschnitt 3.1 kann mit einer Vereinzelungsvorrichtung, die mit einer Sensorik gekoppelt ist, ausgestattet sein, so dass verschiedene Backwaren sortiert und einem oder mehreren zugeordneten Entnahmeplätzen zugeführt werden können (Fig. 4A bis 4C und 4E bis 4F).

Durch die Anordnung der Abnahmevorrichtung 3 oberhalb der Zuführvorrichtung 2 kann die Wärme der insbesondere auf dem Austragabschnitt 3.2 befindlichen Backwaren dazu genutzt werden, die in der Beladeeinheit 2.4 befindlichen Roh-Backwaren anzuwärmen bzw. umgekehrt die Backwaren abzukühlen, beispielsweise mittels Gebläsevorrichtung 7 oder anderem Wärmetauscher. Eine Gebläsevorrichtung 7 mit Lüfterrad 7.2 und Saugkanal 7.1 ist in Fig. 4E, 4G gezeigt.

Bei dem in Fig. 5 gezeigten Ausführungsbeispiel sind die Zuführvorrichtung 2 und die Abnahmevorrichtung 3 auf zwei gegenüberliegenden Seiten der Fördereinheit 1 angeordnet. Im übrigen kann der Aufbau ähnlich ausgeführt sein, wie bei dem Ausführungsbeispiel gemäß den Fig. 4A bis 4H.

Die automatische Backeinrichtung mit der Steuereinrichtung 3.5, die an der in den Fig. 1 und 4C sowie 4G und 4H gezeigten Stelle neben der Entnahmevorrichtung 3.3 oder an anderer Stelle, z.B. auch zentral angeordnet sein kann oder aber mehrere verteilte Komponenten aufweisen kann, lässt es zu, dass entsprechend einer Abnahme von backwaren durch den Kunden rechtzeitig Backwaren in Abhängigkeit von der jeweils abgenommenen Menge über die Zuführvorrichtung 2 nachgeführt werden. Hierbei kann durch die Steuereinrichtung 3.5 entweder die von den Kunden angegebene Anzahl der jeweiligen Backwaren gespeichert und bei der Nachführung berücksichtigt werden. Die Steuereinrichtung kann alternativ oder zusätzlich zur Nachführung der Backwaren auch die Information der Füllstandserkennung nutzen. Bei Backwarenmangel kann eine Frühwarnung im Bereich des Zuführspeichers z.B. optisch oder akustisch abgegeben werden.

Zudem bietet die Steuereinrichtung 3.5 die Möglichkeit einer Fernwartung bzw. Fernüberwachung für Fehlererkennung, Fehlerbehebung, Softwareänderungen oder logistische Funktionen, wie Rohwarendisposition, statistische Auswertung über Kunden-Kaufverhalten, Bedarfsmengensteuerung zu bestimmten Zeiten oder dgl. Hierbei können mit der Steuereinrichtung verbundene Programmspeicher für verschiedene Backwarentypen mit der jeweiligen Backlogik wie Ablaufsteuerung, Geschwindigkeitssteuerung, Temperaturregelung und/oder Beschwaderung benutzt werden. Ferner können mit dem beschriebenen Aufbau auch Wartungs- und Reinigungsfunktionen gesteuert werden.

## Patentansprüche

1. Automatische Backeinrichtung mit einer von einer Steuereinrichtung (3.5) gesteuerten Fördervorrichtung, die mehrere Kanäle (3.10) aufweist und mittels der Backwaren von einer Zuführvorrichtung (2) durch eine Heizeinrichtung eines Ofenteils (6) zu einer Abnahmevorrichtung (3) gefördert werden,
**dadurch gekennzeichnet,**
**dass** die Backeinrichtung als Laden-Backeinrichtung mit der einem Ladenpersonal zuzuordnenden, vor dem Ofenteil (6) liegenden Zuführvorrichtung (2) und der kundenseitig anzuordnenden, dem Ofenteil (6) folgenden Abnahmevorrichtung (3) in der Weise ausgebildet ist, dass die Abnahmevorrichtung (3) mehrere an die Fördervorrichtung angeschlossene Kanäle (3.10) aufweist, deren Eingängen steuerbare Zuführmittel (3.7) vorgeschaltet sind, welche mittels der Steuereinrichtung (3.5) in Abhängigkeit der den Kanälen (3.10) zuzuführenden Backwaren öffenbar sind, und
**dass** an die Kanäle (3.10) eine Entnahmevorrichtung (3.3) zur Entnahme von Backwaren durch Kunden angeschlossen ist.

2. Backeinrichtung nach Anspruch 1,
**dadurch gekennzeichnet,**
**dass** entlang der Fördervorrichtung eine Sensoreinrichtung (5) angeordnet ist, mit der die geförderten Backwaren unterscheidbar sind und den zugeordneten oder zuordenbaren Kanälen (3.10) differenziert zuführbar sind.

3. Backeinrichtung nach Anspruch 1 oder 2,
**dadurch gekennzeichnet,**
**dass** der Fördervorrichtung mindestens eine Puffereinheit (3.8) zugeordnet ist, der Backwaren gesteuert zuführbar sind, wenn die Abnahmevorrichtung (3) zumindest teilweise gefüllt oder die Förderung gestört ist.

4. Backeinrichtung nach einem der vorhergehenden Ansprüche,
**dadurch gekennzeichnet,**
**dass** die Zuführvorrichtung eine Beladeeinheit (2.4) mit mehreren, verschiedenen Backwaren zugeordneten oder zuordenbaren Beladekanälen (2.41) aufweist, die über auf und zu steuerbare Beladeelemente (2.42) zur Fördervorrichtung führen.

5. Backeinrichtung nach einem der Ansprüche 2 bis 4,
**dadurch gekennzeichnet,**
**dass** die Sensoreinrichtung (5) in der Beladeeinheit (2.4) und/oder der Abnahmevorrichtung (3) angeordnete Füllstandsdetektoren (5.3, 5.4) aufweist.

6. Backeinrichtung nach einem der vorhergehenden Ansprüche,
**dadurch gekennzeichnet,**
**dass** der Fördervorrichtung mindestens eine Wendeeinheit (2.6, 1.5) für die Backwaren zugeordnet ist.

7. Backeinrichtung nach Ansprüche 2 und 6 in Kombination,
**dadurch gekennzeichnet,**
**dass** die Sensoreinrichtung (5) mindestens einen Lagesensor (5.1) aufweist und
**dass** die mindestens eine Wendeeinheit (2.6) mittels der Steuereinrichtung (3.5) in Abhängigkeit von Signalen des mindestens einen Lagesensors (5.1) ansteuerbar ist.

8. Backeinrichtung nach einem der vorhergehenden Ansprüche,
**dadurch gekennzeichnet,**
**dass** die Steuereinrichtung (3.5) mit einer Kundeneingabevorrichtung gekoppelt ist, mit der Art und/oder Anzahl der Backwaren wählbar sind und eine Registrierung vornehmbar ist.

9. Backeinrichtung nach einem der vorhergehenden Ansprüche,
**dadurch gekennzeichnet,**
**dass** die Entnahmevorrichtung (3.3) mit mindestens einer Anschlusseinheit zum lösbaren Anbringen eines Transportbehältnisses durch den Kunden versehen ist.

## Claims

1. Automatic baking apparatus having a conveying device which is controlled by a control unit (3.5) and has a plurality of channels (3.10) and by means of which baked goods are conveyed from a feeding device (2) through a heating arrangement of part (6) of an oven to a discharge device (3),
**characterised in that**
the baking apparatus is designed as a retail baking assembly having a feeding device (2), located in front of the oven part (6) and to be allocated to a member of the shop staff, and a discharge device (3) following the oven part (6) and to be arranged on the customers' side, in such a way that the discharge device (3) has a plurality of channels (3.10) connected to the conveying device and upstream of the entrances of which feeding means (3.7) are connected which can be opened by means of the control unit (3.5) in dependence on the baked goods to be supplied to the channels (3.10), and
**in that** connected to the channels (3.10) is a removal device (3.3) enabling customers to remove baked goods.

2. Baking apparatus according to claim 1,
**characterised in that** along the conveying device is disposed a sensor arrangement (5) by means of which the conveyed baked goods can be distinguished and can be fed in a differentiated manner to the channels (3.10) which are or can be allocated.

3. Baking apparatus according to claim 1 or 2,
**characterised in that** associated with the conveying device is at least one buffer unit (3.8), to which baked goods can be fed in a controlled manner if the discharge device (3) is at least partially full or the conveying process is interrupted.

4. Baking apparatus according to one of the preceding claims, **characterised in that** the feeding device has a loading unit (2.4) with a plurality of loading channels (2.41) which are or can be allocated to various baked goods and which lead to the conveying device via loading elements (2.42) which can be controlled open and closed.

5. Baking apparatus according to one of claims 2 to 4, **characterised in that** the sensor arrangement (5) has filling level detectors (5.3,5.4) arranged in the loading unit (2.4) and/or the discharge device (3).

6. Baking apparatus according to one of the preceding claims, **characterised in that** at least one reversing unit (2.6,1.5) for the baked goods is allocated to the conveying device.

7. Baking apparatus according to claims 2 and 6 in combination, **characterised in that** the sensor arrangement (5) has at least one position sensor (5.1), and
**in that** the at least one reversing unit (2.6) may be actuated by means of the control unit (3.5) in dependence on signals from the at least one position sensor (5.1).

8. Baking apparatus according to one of the preceding claims, **characterised in that** the control unit (3.5) is coupled to a customer input device by means of which the type and/or number of the baked goods can be selected and registration undertaken.

9. Baking apparatus according to one of the preceding claims, **characterised in that** the removal device (3.3) is provided with at least one connection unit enabling the customer to attach a transport container in a detachable manner.

## Revendications

1. Dispositif de cuisson automatisé avec un dispositif de transport commandé par un dispositif de commande (3.5), qui présente plusieurs canaux (3.10) et au moyen duquel des produits de boulangerie-pâtisserie sont transportés d'un dispositif d'amenée (2) à un dispositif de prélèvement (3) via un dispositif de chauffage d'un four (6),
**caractérisé**
**en ce que** le dispositif de cuisson est réalisé comme dispositif de cuisson en magasin avec le dispositif d'amenée (2) à affecter à du personnel de magasin, situé devant le four (6), et le dispositif de prélèvement (3) situé derrière le four (6), à disposer du côté de la clientèle, de telle manière que le dispositif de prélèvement (3) présente plusieurs canaux (3.10) raccordés au dispositif de transport, en amont des entrées desquels des moyens d'amenée pouvant être commandés (3.7) sont disposés, lesquels peuvent être ouverts au moyen du dispositif de commande (3.5) en fonction des produits de boulangerie-pâtisserie à amener aux canaux (3.10) et
**en ce qu'**un dispositif de prélèvement (3.3.) est raccordé aux canaux (3.10) pour le prélèvement de produits de boulangerie-pâtisserie par des clients.

2. Dispositif de cuisson selon la revendication 1,
**caractérisé**
**en ce qu'**un dispositif à capteur (5) est disposé le long du dispositif de transport, lequel permet de distinguer les produits de boulangerie-pâtisserie transportés et de les amener de manière différenciée aux canaux (3.10) associés ou pouvant être associés.

3. Dispositif de cuisson selon la revendication 1 ou 2,
**caractérisé**
**en ce qu'**au moins une unité tampon (3.8) est affectée au dispositif de transport, à laquelle des produits de boulangerie-pâtisserie peuvent être amenés de manière commandée, lorsque le dispositif de prélèvement (3) est au moins en partie rempli ou que le transport est défaillant.

4. Dispositif de cuisson selon l'une quelconque des revendications précédentes,
**caractérisé**
**en ce que** le dispositif d'amenée présente une unité de chargement (2.4) avec plusieurs canaux de chargement (2.41) associés ou pouvant être associés à plusieurs différents produits de boulangerie-pâtisserie, lesquels mènent au dispositif de transport via des éléments de chargement (2.42) dont l'ouverture et la fermeture peuvent être commandées.

5. Dispositif de cuisson selon l'une quelconque des revendications 2 à 4,
**caractérisé**
**en ce que** le dispositif de capteur (5) présente des détecteurs de niveau de remplissage (5.3, 5.4) disposés dans l'unité de chargement (2.4) et/ou dans le dispositif de prélèvement (3).

6. Dispositif de cuisson selon l'une quelconque des revendications précédentes,
**caractérisé**
**en ce qu'**au moins une unité de retournement (2.6, 1.5) pour les produits de boulangerie-pâtisserie est associée au dispositif de transport.

7. Dispositif de cuisson selon les revendications 2 et 6 combinées,
**caractérisé**
**en ce que** le dispositif à capteur (5) présente au moins un capteur de position (5.1) et
**en ce que** au moins une unité de retournement (2.6) peut être amorcée au moyen du dispositif de commande (3.5) en fonction des signaux d'au moins un capteur de position (5.1).

8. Dispositif de cuisson selon l'une quelconque des revendications précédentes,
**caractérisé**
**en ce que** le dispositif de commande (3.5) est couplé avec un dispositif d'entrée clientèle qui permet de choisir le type et/ou le nombre de produits de boulangerie-pâtisserie et de procéder à un enregistrement.

9. Dispositif de cuisson selon l'une quelconque des revendications précédentes,
**caractérisé**
**en ce que** le dispositif de prélèvement (3.3) est pourvu d'au moins une unité de raccordement pour la mise en place amovible d'un récipient de transport par le client.
